# FASCICULE DE BREVET EUROPEEN

(11) **EP 2 334 513 B1**
(45) Date de publication et mention de la délivrance du brevet: **25.07.2012**
(21) Numéro de dépôt: 09752882.2
(22) Date de dépôt: 28.09.2009
(51) Int. Cl.: B60R 5/04

(54) **DISPOSITIF D'OCCULTATION D'UN COFFRE DE VEHICULE AUTOMOBILE COMPRENANT UN RIDEAU ET DES MOYENS DE CENTRAGE DE CE RIDEAU**
WICKELVORRICHTUNG, INSBESONDERE FÜR EINE SCHUTZBLENDE, WIE ZUM BEISPIEL EINE SONNENBLENDE ODER EINE LASTRAUMABDECKUNG
WINDING DEVICE, PARTICULARLY FOR A PROTECTIVE BLIND SUCH AS A SUNBLIND OR A LOADSPACE COVER

(30) Priorité: 14.10.2008 FR 0805685
(43) Date de publication de la demande: 22.06.2011
(73) Titulaire: Renault S.A.S., 92100 Boulogne-Billancourt (FR)
(72) Inventeur: GARNIER, Michel, F-78370 Plaisir (FR)
(86) Numéro de dépôt international: PCT/FR2009/051829
(87) Numéro de publication internationale: WO 2010/043794

(56) Documents cités:
- EP-A- 1 623 862
- EP-A- 1 683 666
- EP-A- 1 852 303
- FR-A- 2 895 387

## Description

Certains véhicules automobiles comportent un grand coffre, qui s'étend à l'arrière des sièges arrière et dont l'ouverture supérieure n'est pas fermée par une tablette rigide, mais par un dispositif d'occultation comprenant un rideau occultant. Ce dispositif est communément appelé cache-bagage.

Le rideau du cache-bagage est monté entre les parois latérales du coffre, au moyen d'embouts de montage qui dépassent, latéralement, des deux côtés de la largeur du rideau. La largeur du rideau est inférieure à l'écartement des parois du véhicule et le rideau doit donc être centré entre ces dernières pour remplir pleinement sa fonction d'occultation de l'intérieur du coffre et satisfaire la prestation qualité perçue. Le rideau doit, de plus, être tendu entre les parois latérales du coffre et selon la longueur du coffre afin de bien masquer l'intérieur du coffre.

Le document FR 2 895 387 qui correspond au préambule de la revendication 1 décrit un rideau à enrouleur pouvant servir de cache-bagage. L'enrouleur permet de maintenir le rideau tendu selon la longueur du coffre. Le montage du rideau, entre les parois latérales du coffre, est mis en oeuvre au moyen de tiges, distantes l'une de l'autre selon la longueur du rideau. Ces tiges sont solidaires du rideau et s'étendent selon sa largeur. Les deux extrémités de chacune de ces tiges prennent appui contre les deux parois latérales du coffre, permettant le montage du rideau et sa tension entre les deux parois latérales du coffre. Deux embouts de montage, disposés selon une largeur du rideau et dépassant de ce dernier, peuvent remplir la même fonction que les deux extrémités d'une des tiges précitées.

Par ailleurs, pour centrer le rideau entre les parois, il est connu d'utiliser des tiges ou des embouts de montage dont l'extrémité comporte des moyens de rappel sur lesquels repose un capuchon. Lorsque que le rideau est monté, les capuchons viennent en appui contre les parois latérales du coffre et les moyens de rappel exercent, sur chacun des capuchons, une force qui le presse contre la paroi latérale avec laquelle il est en contact. Le rideau est ainsi maintenu pincé entre les parois, du fait de la compression des moyens de rappel équipant les extrémités des embouts. Par ailleurs, les deux embouts étant identiques, la force exercée par les moyens de rappel, disposés sous le capuchon, est la même de chaque côté et le rideau est donc centré entre les parois.

Les rideaux à enrouleur sont chers et fragiles.

Les embouts comportant des capuchons montés sur des moyens de rappel ont un coût de fabrication élevé.

Un but de la présente invention est donc de fournir un dispositif d'occultation de l'ouverture d'un coffre, peu onéreux à produire, et apte à remplir parfaitement sa fonction d'occultation de l'intérieur du coffre.

Ce but est atteint au moyen d'un dispositif d'occultation d'une ouverture de coffre de véhicule automobile définie par les deux parois latérales dudit véhicule automobile, ledit dispositif comprenant :
- un rideau occultant muni de deux embouts de montage qui s'étendent selon la largeur dudit rideau et qui sont aptes à coopérer chacun avec une desdites parois latérales pour le montage dudit rideau entre lesdites parois ; et
- des moyens de centrage desdits embouts entre lesdites parois latérales. Selon l'invention, lesdits moyens de centrage comportent :
   - un élément formant poussoir, monté mobile en translation longitudinale sur chacune desdites parois, ledit élément formant poussoir comprenant une portion d'appui, apte à venir en appui contre ledit embout, et des moyens de rappel aptes à exercer sur ledit embout une force sensiblement perpendiculaire audit embout de manière à tendre ledit rideau, lorsque ledit rideau est monté entre lesdites parois ; et
   - deux lames élastiquement déformables, disposées chacune sur une desdites parois latérales ou sur chacun desdits embouts, chacune desdites lames étant apte à être écrasée de manière à exercer une force de rappel repoussant ledit embout selon une direction parallèle audit embout, moyennant quoi, la différence entre ladite largeur dudit rideau et ledit écartement desdites parois est répartie uniformément de chaque côté dudit rideau.

Le terme « rideau » désigne, au sens de la présente invention, par exemple, une feuille souple, en matériau textile ou autre, une plaque ou tablette éventuellement télescopique ou articulée. Le rideau peut être à enrouleur ou non. Dans le cas d'une tablette ou plaque articulée, l'élément formant poussoir assure la planéité de cette plaque articulée, en tirant sur les deux extrémités de cette plaque ce qui permet de placer dans un même plan les différentes parties de la plaque.

Le terme « embout » désigne une pièce fixée, par exemple, au bord du rideau ou l'extrémité d'une tige ou barre.

Les lames précitées permettent le centrage du rideau entre les deux parois ; elles sont simples et peu couteuses à fabriquer.

L'élément formant poussoir sert de tenseur pour le rideau ce qui peut permettre d'éviter l'utilisation d'un rideau à enrouleur.

L'élément formant poussoir peut être monté sur la paroi latérale et dépasser de cette dernière, vers l'intérieur du coffre.

Selon un mode de réalisation particulier, ledit élément formant poussoir est disposé dans une cavité ménagée dans ladite paroi latérale et ouverte au niveau de ladite paroi latérale.

Le fait de monter l'élément formant poussoir dans la cavité permet de protéger ce dernier des chocs et autres, pouvant être occasionnés par les bagages ou par l'utilisateur du véhicule. Le mode d'insertion de l'embout dans la cavité n'est pas limité selon l'invention. Le rideau peut, par exemple, être plié selon sa longueur afin de réduire sa largeur et permettre l'insertion des embouts dans les cavités.

Avantageusement, ladite cavité présente, en outre, une ouverture d'accès permettant l'insertion dudit embout par un mouvement de translation selon une direction contenue dans le plan de ladite paroi. Une telle ouverture permet l'utilisation d'un rideau du type tablette rigide dont la largeur ne peut être déformée pour monter le rideau entre les parois du coffre.

Les lames sont disposées chacune sur une paroi latérale. Lorsque ces dernière comportent chacune une cavité, lesdites lames sont disposées chacune sur la surface de ladite cavité qui est parallèle à ladite paroi latérale. Cette surface de la cavité est considérée, au sens de l'invention, comme faisant partie de la paroi latérale elle-même, tout comme tout élément disposé, monté ou ménagé dans la paroi latérale.

Selon un mode de réalisation, ladite paroi latérale comportant une portion inférieure et une tablette qui forme un caisson avec ladite portion inférieure, ladite cavité est formée dans ledit caisson et ladite ouverture d'accès de ladite cavité est disposée au niveau de ladite tablette.

Selon un mode de réalisation, ladite lame est solidaire dudit élément formant poussoir. On réduit ainsi le nombre de pièces du dispositif ce qui facilite son montage. De plus, comme exposé ultérieurement, la position relative de l'élément poussoir par rapport à la lame est fixe ce qui assure un bon fonctionnement du dispositif de l'invention.

Selon un mode de réalisation particulier, ledit élément formant poussoir comporte un corps longitudinal et ladite lame est disposée sur une patte connectée audit corps.

Avantageusement, ledit élément formant poussoir et ladite lame sont formés d'une seule pièce.

Selon un mode de réalisation, ladite portion d'appui est conformée de manière à venir en contact avec la longueur dudit embout ce qui permet d'assurer une surface de contact suffisante pour procurer un bon maintien et bien répartir la force exercée par l'élément formant poussoir sur l'embout.

La portion d'appui peut comporter des nervures aptes à venir en contact avec ledit embout. De telles nervures permettent de réduire le jeu éventuel entre l'embout et la portion d'appui de l'élément formant poussoir. Ce jeu pouvant provenir, par exemple, de la détente du rideau du fait de son utilisation.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue partielle, en perspective, d'un mode de réalisation du dispositif de l'invention, le rideau occultant n'étant pas monté entre les parois latérales ;
- la Figure 2 représente une vue partielle en perspective du mode de réalisation de la figure 1, le rideau étant monté entre les parois ; et
- la Figure 3 représente une vue en coupe transversale du mode de réalisation représenté sur les Figures 1 et 2.

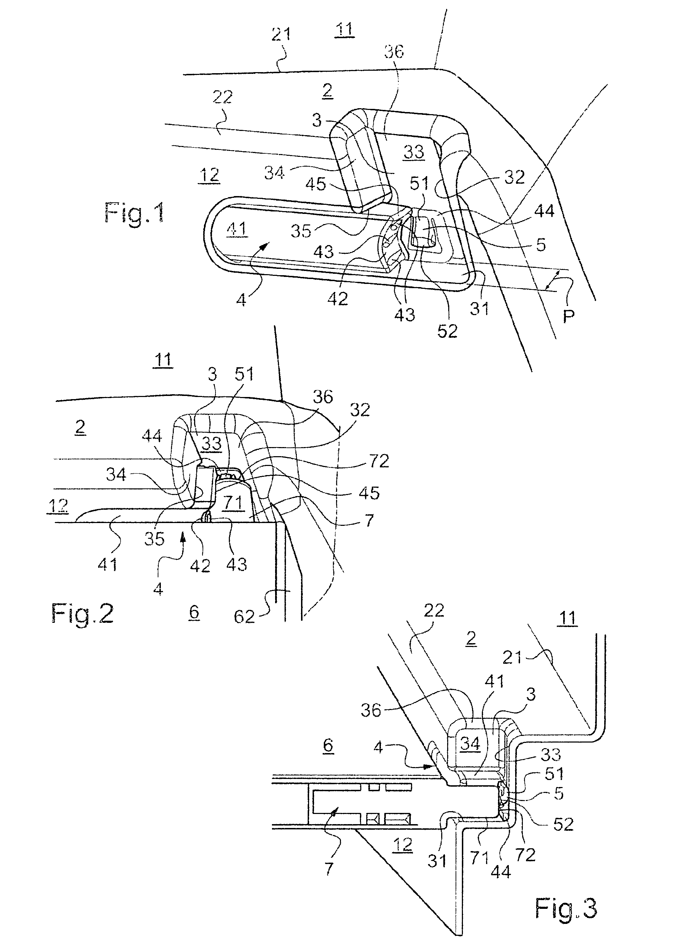

La Figure 1 représente une paroi latérale, plane, d'un coffre de véhicule automobile qui comporte une tablette 2. La tablette 2 est perpendiculaire à la paroi latérale. La paroi latérale comporte donc une portion supérieure 11 qui s'étend au-dessus de la tablette 2 et une portion inférieure 12, qui s'étend entre le plancher du véhicule et la tablette 2. Ces deux portions 11 et 12 sont deux plans parallèles. La tablette 2 présente un premier bord 21, connecté à la portion supérieure 11 de la paroi, et un second bord 22, parallèle au premier bord 21 et distant de la portion supérieure 11. Ce second bord 22 est connecté à la portion inférieure 12 de la paroi latérale ce qui fait que la tablette 2 et la portion inférieure 12 de la paroi latérale forment une sorte de caisson, situé latéralement, à l'intérieur du coffre.

Comme représenté sur la figure 1, la portion inférieure 12 de la paroi latérale comporte une cavité 3, ménagée dans le caisson précité. Cette cavité 3 présente une profondeur p, mesurée selon une direction perpendiculaire à la paroi latérale. La cavité 3 est formée par l'intersection d'une cavité qui s'étend selon la longueur du coffre, avec une cavité qui s'étend selon la hauteur du coffre. La cavité 3 est délimitée, entre autre, par un fond 31, parallèle à la tablette 2 et trois surfaces verticales 32, 33 et 34 qui sont perpendiculaires au fond 31. Les deux surfaces verticales 32 et 33 sont reliées l'une à l'autre. Ces deux surfaces 32 et 33 sont aussi perpendiculaires l'une à l'autre et sécantes avec le fond 31. La surface verticale 33 est située à la distance p de la portion inférieure 12 de la paroi latérale. La troisième surface verticale 34 est reliée à la surface verticale 33. Elle est parallèle à la surface verticale 32. Cette surface verticale 34 n'est pas reliée au fond 31. Elle comporte un bord libre 35, orienté vers le fond 31 et distant de ce dernier. La cavité 3 est ouverte au niveau d'une première ouverture, en forme de L, disposée sur la portion inférieure 12 de la paroi. La cavité 3 est également ouverte au niveau d'une seconde ouverture 36, dite « ouverture d'accès », disposée sur la tablette 2. Cette seconde ouverture 36, sensiblement rectangulaire communique avec la première ouverture en forme de L précitée pour ne former qu'une seule ouverture qui s'étend donc selon deux plans perpendiculaires.

Dans le mode de réalisation représenté, la paroi verticale 32 est disposée à proximité des dossiers des sièges arrière du véhicule. L'invention n'est néanmoins pas limitée à cette disposition.

Un élément formant poussoir 4 est logé dans la portion longitudinale de la cavité 3. Cet élément formant poussoir 4 comporte un corps 41 qui s'étend selon la longueur du coffre. Le corps 41 est visible au niveau de la première ouverture en L, disposée au niveau de la portion inférieure 12 de la paroi latérale. Ce corps 41 est monté dans la cavité 3 par l'intermédiaire de moyens de rappel (non représentés) qui prennent appui sur une butée (non représentée mais située dans la direction opposée à la surface verticale 32) située derrière la portion inférieure 12 de la paroi latérale. Ces moyens de rappel sont disposés de manière à ce que l'élément formant poussoir 4 soit mobile en translation selon la longueur du coffre et exerce une force de rappel parallèle à la longueur du coffre et dirigée vers la surface verticale 32 de la cavité 3. Le corps 41 présente ainsi une extrémité libre, qui est disposée dans la cavité 3, au niveau de l'ouverture en L, en dessous de l'ouverture d'accès 36. Ce corps 41 porte, au niveau de cette extrémité libre, une surface d'appui 42, munie d'une pluralité de nervures 43. Cette surface d'appui 42 est une portion de cylindre et les nervures 43 sont disposées parallèlement à la hauteur du cylindre. La hauteur de ce cylindre s'étend selon une direction perpendiculaire à la portion inférieure 12 de la paroi latérale du coffre, c'est-à-dire selon la direction selon laquelle la profondeur p de la cavité 3 est mesurée.

L'élément formant poussoir 4 comporte également une patte 44, plane qui s'étend parallèlement à la portion inférieure 12 de la paroi latérale. Cette patte 44 est visible au niveau de l'ouverture en forme de L précitée. Cette patte 44 est disposée à distance de la portion inférieure 12, à proximité de la surface verticale 33. Cette patte 44 est disposée en avant de la portion d'appui 42 (selon la longueur du véhicule), dans la direction de la surface verticale 32. La patte 44 est formée d'un cadre sensiblement trapézoïdal dont les deux bords parallèles sont parallèles à la longueur du coffre. Un des deux bords non parallèles est relié au corps 41. Le bord supérieur, parallèle à la longueur du coffre, supporte une lame 5. Cette lame 5 est formée d'une seule pièce avec la patte 44 et le corps 41. Cette lame 5 est une lame élastiquement déformable qui comporte une portion 51 connectée à la patte 44 et une portion de contact 52 qui est distante de la patte 44 selon la profondeur p de la cavité 3 et qui est située dans le cadre précité. La portion de contact 52 peut ainsi être reculée élastiquement vers la surface verticale 33, à travers le cadre de la patte 44. La lame 5 est, dans le cas présent, légèrement courbe, la portion de contact 52 étant sensiblement dirigée vers la tablette 2.

En référence à la figure 2, le rideau occultant 6 est monté entre les deux parois latérales du coffre par l'intermédiaire de deux embouts de montage 7. Ces deux embouts 7 sont disposés selon une largeur du rideau 6. Les deux embouts de montage 7 peuvent être formés, par exemple, par les deux extrémités d'une tige transversale fixée au rideau 6 ou être comme c'est le cas sur le mode de réalisation représenté, deux pièces séparées. L'embout 7 présente une longueur qui dépasse du rideau 6 selon la largeur de ce dernier. L'embout 7 présente une forme sensiblement cylindrique. Le rideau 6 comporte un pan 62 qui retombe verticalement au-delà des embouts 7, afin de bien cacher l'intérieur du coffre. Le rideau 6 s'étend ainsi horizontalement entre les deux parois latérales du coffre et verticalement au niveau de la porte du coffre et du dossier des sièges arrière. L'embout 7 présente une surface externe cylindrique 71 qui repose sur le fond 31 de la cavité 3 et coopère avec la portion d'appui 42 et les nervures 43 du corps 41 de l'élément formant poussoir 4. L'embout 7 présente une section d'extrémité 72 (voir figure 3), plane et circulaire, qui vient écraser la portion de contact 52 de la lame 5. Les deux embouts 7 écrasant les deux lames 5 disposées en regard l'une de l'autre, permettent de maintenir le rideau 6 entre les deux parois latérales du coffre. Les deux lames 5 exerçant une force de rappel de même intensité, de même direction mais de sens opposé, le rideau 6 est bien centré entre les deux parois latérales du coffre. De plus, le corps 41 de l'élément formant poussoir 4 pousse l'embout 7 vers la surface verticale 32 ce qui permet de tendre le rideau 6.

Comme représenté sur la figure 3, la portion de contact 52 de la lame 5 est repoussée vers la paroi latérale sur laquelle elle est disposée (plus précisément la portion supérieure 11 de la paroi latérale). La force de rappel exercée par la lame 5 repousse l'embout 7 vers la paroi latérale opposée du coffre. Le rideau 6 est ainsi maintenu et centré entre les deux parois latérales du fait du pincement des deux embouts 7 entre les lames 5. L'embout 7 repose de plus sur le fond 31 de la cavité ce qui permet d'éviter qu'il ne tombe sous l'effet de son poids et vient donc compléter et renforcer le maintien procuré par les lames 5.

Le montage du dispositif de l'invention va maintenant être décrit en référence aux figures 1 à 3.

L'utilisateur saisit les deux embouts 7 et les glissent verticalement dans la seconde ouverture 36 disposée sur la tablette 2. Cette seconde ouverture 36 communiquant avec la première ouverture en forme de L, l'utilisateur peut insérer simultanément et d'un seul mouvement, les deux embouts 7 entre les surfaces verticales 32 et 34 de chacune des cavités 3, jusqu'à les faire venir chacun au contact du fond 31 d'une cavité 3. Lors de son passage, chaque embout 7 pousse la lame 5, et plus particulièrement la portion de contact 52 vers le fond 31 de la cavité 3 et vers la paroi verticale 33. La lame 5 étant élastiquement déformable, elle tend à s'allonger contre la surface verticale 33 de la cavité 3. La portion de contact 52 reste en appui contre la section d'extrémité 72 de l'embout 7 et exerce sur ce dernier une force qui le repousse parallèlement à la largeur du rideau 6. La portion d'appui 42 du corps 41 permet, de par sa forme cylindrique qui emboîte l'embout 7 au niveau de la portion verticale de la cavité 3, sous la seconde ouverture 36, de bien maintenir l'embout 7. L'élément formant poussoir 4 est disposé de manière à ce que, lors de son passage au niveau du bord supérieur 45 (voir figures 1 et 2) de la portion d'appui 42, l'embout 7 pousse le corps 41 de l'élément formant poussoir 4 dans la direction opposée à la surface verticale 32 ; les moyens de rappel de l'élément formant poussoir 4 sont ainsi comprimés durant ce passage. Cette configuration permet d'assurer un bon contact entre la portion d'appui 42 et la surface cylindrique 71 de l'embout 7. Lorsque la longueur de l'embout 7 est logée dans la portion d'appui 42, les moyens de rappel ne sont pas comprimés au maximum et peuvent même être au repos.

Lorsque l'utilisateur poursuit le montage du rideau 6, il tire sur ce dernier. Ce faisant il comprime les moyens de rappel de l'élément formant poussoir 4, de chaque côté du rideau 6. Il fixe ensuite une seconde largeur du rideau 6 entre les parois latérales du coffre, à proximité de la porte de coffre, dans le cas présent. Une fois que le rideau 6 est monté selon deux largeurs entre les parois latérales, l'utilisateur peut le relâcher. Chaque embout 7 en appui contre la surface d'appui 42 du corps 41, est alors soumis à la force de rappel de l'élément formant poussoir 4 qui le pousse vers la surface verticale 32, c'est-à-dire vers les sièges arrière ; le rideau 6 est ainsi parfaitement tendu sans utilisation d'enrouleur.

Dans le mode de réalisation particulier ici représenté, le fait que la lame 5 soit solidaire de l'élément formant poussoir 4 permet d'obtenir, à tout moment, un contact entre la section d'extrémité de l'embout 7 et la lame 5. En effet, lorsque la lame 5 est disposée sur la paroi verticale 33 de la cavité 3 (cette paroi de la cavité est assimilée à la paroi latérale puisqu'elle lui est parallèle), il est possible, lorsque l'utilisateur tire sur le rideau 6 pour monter la seconde largeur, que cette traction déplace l'embout 7 tout en comprimant les moyens de rappel de l'élément formant poussoir 4. L'utilisateur risque ainsi de déplacer l'embout 7 qui ne serait plus en contact avec la lame 5. Lorsque la lame 5 est solidaire de l'élément formant poussoir 4, la traction exercée sur le rideau 6 et donc sur l'embout 7 est transmise à l'élément formant poussoir 4 dont les moyens de rappel sont alors comprimés. L'embout 7 est ainsi toujours soumis à la fois à la force de rappel de la lame 5 et à la poussée de l'élément formant poussoir 4. Ces deux forces s'exercent selon des directions perpendiculaires entre elles. L'élément formant poussoir 7 sert non seulement à tendre le rideau 6 mais aussi à positionner l'embout 7 de manière à ce que la section de ce dernier vienne effectivement en contact avec la portion de contact 52 de la lame 5.

Selon un autre mode de réalisation non représenté, la lame 5 comporte un pont ou une arche dont le sommet est distant de la paroi latérale ou de la paroi verticale 33 de la cavité 3. Les deux extrémités du pont ou de l'arche sont disposées sur la paroi ou sur le cadre précité de la patte 44. La force de rappel est exercée en écrasant le sommet de l'arche vers la paroi latérale ou la paroi verticale 33 de la cavité 3.

## Revendications

1. Dispositif d'occultation d'une ouverture de coffre de véhicule automobile définie par les deux parois latérales (11,12) dudit véhicule automobile, ledit dispositif comprenant :
- un rideau occultant (6), muni de deux embouts de montage (7) qui s'étendent selon la largeur dudit rideau (6) et qui sont aptes à coopérer chacun avec une desdites parois latérales pour le montage dudit rideau (6) entre lesdites parois (11,12) ; et
- des moyens de centrage desdits embouts entre lesdites parois latérales ;
**caractérisé en ce que** lesdits moyens de centrage comportent :
- un élément formant poussoir (4), monté mobile en translation longitudinale sur chacune desdites parois (11,12), ledit élément formant poussoir (4) comprenant une portion d'appui (42), apte à venir en appui contre ledit embout (7) et des moyens de rappel aptes à exercer sur ledit embout (7) une force sensiblement perpendiculaire audit embout (7) de manière à tendre ledit rideau (6), lorsque ledit rideau est monté entre lesdites parois (11, 12) ; et
- deux lames élastiquement déformables (5), disposées chacune sur une desdites parois latérales (11, 12) ou sur chacun desdits embouts (7), chacune desdites lames (5) étant apte à être écrasée de manière à exercer une force de rappel repoussant ledit embout (7) selon une direction parallèle audit embout (7), moyennant quoi, la différence entre ladite largeur dudit rideau (6) et ledit écartement desdites parois (11, 12) est répartie uniformément de chaque côté dudit rideau (6).

2. Dispositif d'occultation selon la revendication 1, **caractérisé en ce que** ledit élément formant poussoir (4) est disposé dans une cavité (3) ménagée dans ladite paroi latérale (11, 12) et ouverte au niveau de ladite paroi latérale (11, 12).

3. Dispositif selon la revendication 2, **caractérisé en ce que** ladite cavité (3) présente, en outre, une ouverture d'accès (36) permettant l'insertion dudit embout (7) par un mouvement de translation selon une direction contenue dans le plan de ladite paroi (11, 12).

4. Dispositif d'occultation selon l'une des revendications 2 et 3, **caractérisé en ce que** lesdites lames (5) sont disposées chacune sur la surface (33) de ladite cavité (3) qui est parallèle à ladite paroi latérale (11 ; 12).

5. Dispositif d'occultation selon l'une quelconque des revendications 2 à 4, **caractérisé en ce que** ladite paroi latérale (11, 12) comportant une portion inférieure (12) et une tablette (2) qui forme un caisson avec ladite portion inférieure (12), ladite cavité (3) est formée dans ledit caisson et ladite ouverture d'accès (36) de ladite cavité (3) est disposée au niveau de ladite tablette (2).

6. Dispositif selon l'une quelconque des revendications précédentes, **caractérisé en ce que** ladite lame (5) est solidaire dudit élément formant poussoir (4).

7. Dispositif selon l'une quelconque des revendications précédentes, **caractérisé en ce que** ledit élément formant poussoir (4) comporte un corps longitudinal (41) et **en ce que** ladite lame (5) est disposée sur une patte (44) connectée audit corps (41).

8. Dispositif selon l'une quelconque des revendications 6 et 7, **caractérisé en ce que** ledit élément formant poussoir (4) et ladite lame (5) sont formés d'une seule pièce.

9. Dispositif selon l'une quelconque des revendications précédentes, **caractérisé en ce que** ladite portion d'appui (42) est conformée de manière à venir en contact avec la longueur dudit embout (7).

10. Dispositif selon l'une quelconque des revendications précédentes, **caractérisé en ce que** ladite portion d'appui (42) comporte des nervures (43) aptes à venir en contact avec ledit embout (7).

## Claims

1. Concealing device for a motor vehicle luggage compartment opening defined by the two side walls (11, 12) of said motor vehicle, said device comprising:
- a concealing blind (6), provided with two fitting end pieces (7) which extend along the width of said blind (6) and are each able to engage with one of said side walls in order to fit said blind (6) between said walls (11, 12); and
- means for centering said end pieces between said side walls;
**characterized in that** said centering means have:
- an element forming a pusher (4) which is fitted such that it can move in longitudinal translation on each of said walls (11, 12), said element forming a pusher (4) comprising an abutting portion (42) that is able to butt against said end piece (7) and return means that are able to exert on said end piece (7) a force approximately perpendicular to said end piece (7) so as to stretch said blind (6) when said blind is fitted between said walls (11, 12); and
- two elastically deformable tongues (5) that are located in each case on one of said side walls (11, 12) or on each of said end pieces (7), each of said tongues (5) being able to be compressed so as to exert a return force pushing said end piece (7) back in a direction parallel to said end piece (7), such that the difference between said width of said blind (6) and the spacing of said walls (11, 12) is distributed uniformly on each side of said blind (6).

2. Concealing device according to Claim 1, **characterized in that** said element forming a pusher (4) is located in a cavity (3) which is formed in said side wall (11, 12) and open at said side wall (11, 12).

3. Device according to Claim 2, **characterized in that** said cavity (3) further has an access opening (36) that enables said end piece (7) to be inserted by a movement in translation in a direction contained within the plane of said wall (11, 12).

4. Concealing device according to either of Claims 2 and 3, **characterized in that** said tongues (5) are each located on that surface (33) of said cavity (3) which is parallel to said side wall (11; 12).

5. Concealing device according to any one of Claims 2 to 4, **characterized in that** since said side wall (11, 12) has a lower portion (12) and a shelf (2) which forms a box structure with said lower portion (12), said cavity (3) is formed in said box structure and said access opening (36) in said cavity (3) is located in said shelf (2).

6. Device according to any one of the preceding claims, **characterized in that** said tongue (5) is integral with said element forming a pusher (4).

7. Device according to any one of the preceding claims, **characterized in that** said element forming a pusher (4) has a longitudinal body (41) and **in that** said tongue (5) is located on a tab (44) connected to said body (41).

8. Device according to either of Claims 6 and 7, **characterized in that** said element forming a pusher (4) and said tongue (5) are formed in one piece.

9. Device according to any one of the preceding claims, **characterized in that** said abutting portion (42) is shaped so as to come into contact with the length of said end piece (7).

10. Device according to any one of the preceding claims, **characterized in that** said abutting portion (42) has ribs (43) that are able to come into contact with said end piece (7).

## Patentansprüche

1. Abdeckvorrichtung einer Laderaumöffnung eines Kraftfahrzeugs, die von den zwei Seitenwänden (11, 12) des Kraftfahrzeugs definiert wird, wobei die Vorrichtung enthält:
- ein Abdeckrollo (6), das mit zwei Einbau-Endstücken (7) versehen ist, die sich gemäß der Breite des Rollos (6) erstrecken und in der Lage sind, je mit einer der Seitenwände zum Einbau des Rollos (6) zwischen den Wänden (11, 12) zusammenzuwirken; und
- Zentriereinrichtungen der Endstücke zwischen den Seitenwänden;
**dadurch gekennzeichnet, dass** die Zentriereinrichtungen aufweisen:
- ein einen Schieber bildendes Element (4), das in Längstranslation auf jeder der Wände (11, 12) beweglich eingebaut ist, wobei das einen Schieber bildende Element (4) einen Auflageteil (42), der gegen das Endstück (7) in Auflage kommen kann, und Rückstelleinrichtungen enthält, die auf das Endstück (7) eine Kraft im Wesentlichen lotrecht zum Endstück (7) ausüben können, um das Rollo (6) zu spannen, wenn das Rollo zwischen den Wänden (11, 12) eingebaut ist; und
- zwei elastisch verformbare Lamellen (5), die je auf einer der Seitenwände (11, 12) oder auf jedem der Endstücke (7) angeordnet sind, wobei jede der Lamellen (5) zusammengedrückt werden kann, um eine Rückstellkraft auszuüben, die das Endstück (7) in einer Richtung parallel zum Endstück (7) zurückschiebt, wodurch die Differenz zwischen der Breite des Rollos (6) und dem Abstand der Wände (11, 12) gleichmäßig auf jeder Seite des Rollos (6) verteilt wird.

2. Abdeckvorrichtung nach Anspruch 1, **dadurch gekennzeichnet, dass** das einen Schieber bildende Element (4) in einem Hohlraum (3) angeordnet ist, der in der Seitenwand (11, 12) ausgespart und im Bereich der Seitenwand (11, 12) offen ist.

3. Vorrichtung nach Anspruch 2, **dadurch gekennzeichnet, dass** der Hohlraum (3) außerdem eine Zugangsöffnung (36) aufweist, die das Einfügen des Endstücks (7) durch eine Translationsbewegung in einer Richtung erlaubt, die in der Ebene der Wand (11, 12) enthalten ist.

4. Abdeckvorrichtung nach einem der Ansprüche 2 und 3, **dadurch gekennzeichnet, dass** die Lamellen (5) je an der Fläche (33) des Hohlraums (3) angeordnet sind, die parallel zur Seitenwand (11; 12) ist.

5. Abdeckvorrichtung nach einem der Ansprüche 2 bis 4, **dadurch gekennzeichnet, dass**, wenn die Seitenwand (11, 12) einen unteren Teil (12) und eine Ablage (2) aufweist, die mit dem unteren Teil (12) einen Kasten formt, der Hohlraum (3) in dem Kasten geformt und die Zugangsöffnung (36) des Hohlraums (3) im Bereich der Ablage (2) angeordnet ist.

6. Vorrichtung nach einem der vorhergehenden Ansprüche, **dadurch gekennzeichnet, dass** die Lamelle (5) fest mit dem einen Schieber bildende Element (4) verbunden ist.

7. Vorrichtung nach einem der vorhergehenden Ansprüche, **dadurch gekennzeichnet, dass** das einen Schieber bildende Element (4) einen Längskörper (41) aufweist, und dass die Lamelle (5) auf einer mit dem Körper (41) verbundenen Lasche (44) angeordnet ist.

8. Vorrichtung nach einem der Ansprüche 6 und 7, **dadurch gekennzeichnet, dass** das einen Schieber bildende Element (4) und die Lamelle (5) aus einem Stück geformt sind.

9. Vorrichtung nach einem der vorhergehenden Ansprüche, **dadurch gekennzeichnet, dass** der Auflageteil (42) so geformt ist, dass er mit der Länge des Endstücks (7) in Kontakt kommt.

10. Vorrichtung nach einem der vorhergehenden Ansprüche, **dadurch gekennzeichnet, dass** der Auflageteil (42) Rippen (43) aufweist, die mit dem Endstück (7) in Kontakt kommen können.
